# EUROPÄISCHE PATENTSCHRIFT

(11) **EP 1 743 746 B1**
(45) Veröffentlichungstag und Bekanntmachung des Hinweises auf die Patenterteilung: **30.09.2009**
(21) Anmeldenummer: 06012812.1
(22) Anmeldetag: 22.06.2006
(51) Int. Cl.: B25J 15/02, B21H 9/00

(54) **Greifwerkzeug mit linear beweglicher Greifvorrichtung für einen Roboter**
Gripping tool with linearly movable gripping device for a robot
Outil de préhension avec dispositif de préhension mobile linéairement pour un robot

(30) Priorität: 15.07.2005 DE 102005033733
(43) Veröffentlichungstag der Anmeldung: 17.01.2007
(73) Patentinhaber: ABB AG, 68309 Mannheim (DE)
(72) Erfinder: Sieber, Peter, 61194 Niddatal (DE); Hirz, Michael, 35415 Polheim (DE); Fischer, Michael, 61169 Friedberg (DE)

(56) Entgegenhaltungen:
- EP-A1- 0 552 776
- DE-A1- 3 542 967
- US-A- 3 773 189
- US-A- 4 507 045
- US-A1- 2003 075 941

## Beschreibung

Die Erfindung betrifft ein Greifwerkzeug für einen Roboter zum Aufnehmen und Positionieren eines Werkstücks mittels einer Greifvorrichtung, und mit einem Werkzeuganschlusselement, mit welchem eine Verbindung mit dem Roboter ermöglicht ist. Zudem betrifft die Erfindung einen Roboter mit einem solchen Greifwerkzeug sowie ein Verfahren zum Beschicken einer Reckwalzenanordnung mit Werkstücken unter Verwendung eines solchen Greifwerkzeug

Es ist allgemein bekannt, dass es für Roboter verschiedene Arten von Werkzeugen gibt, die mittels zum Teil standardisierter Werkzeuganschlusselemente, also einer standardisierten Verbindungsstelle zwischen Roboter und Werkzeug, universell zu verschieden zur Verfügung stehen. Es sind auch Greifwerkzeug für Roboter bekannt geworden, die insbesondere dazu dienen, Werkstücke aufzunehmen, sicher zu greifen und an einer anderen Stelle wieder abzulegen. Darüber hinaus sind auch Greifwerkzeuge bekannt, die das Werkstück halten und beispielsweise zu einer Werkzeugmaschine bringen, um dieses Werkstück dort zu fixieren, wo es von der Werkzeugmaschine bearbeitet werden kann.

Den bekannten Greifwerkzeugen ist gemeinsam, dass der Roboter das Werkstück von einer ersten zu einer zweiten Stelle bringt, wobei die Bewegungsbahn, die der Roboter arm und damit auch dass daran angeschlossene Greifwerkzeug vollführt im wesentlichen keine Beschränkungen aufweist, sofern sich die Bewegungsbahn innerhalb des Arbeitsbereiches des Roboters befindet.

Aus der US3.773,189 ist ein pneumatisch beaufschlagtes, zur Verwendung bei einem Industrieroboter vorgesehenes Greifwerkzeug mit einer Greifvorrichtung bekanntgeworden, die mit einer in einer Kolben-Zylinder-Anordung einseitig hin- und herbewegbaren Kolbenstange verbunden ist.

Aus der US 4 507 045 A ist ein robotischer Manipulator bekannt, der einen hin und her bewegbaren Greifkopf mit Greifklauen nebst Antriebseinheit aufweist, welche ebenfalls fluidbetätigt sind.

In der US 2003/075941 A1 schließlich ist ein Greifwerkzeug gemäß dem Oberbegriff des Anspruchs 1 beschrieben, welches zum Aufnehmen und Positionieren eines Werkstückes mittels einer an einer teleskopierbaren Kolbenstange befestigten Greifvorrichtung dient.

Ausgehend von diesem Stand der Technik, ist es Aufgabe der Erfindung, ein Greifwerkzeug und einen Roboter mit einem Greifwerkzeug anzugeben, der Werkstücke noch flexibler handhaben kann. Zudem ist es Aufgabe der Erfindung, ein Verfahren zum Beschicken einer Reckwalzenanordnung mit Werkstücken anzugeben, das die Beschickung möglichst schnell und sicher durchführt.

Diese Aufgabe wird gelöst durch ein Greifwerkzeug für einen Roboter mit den im Patentanspruch 1 genannten Merkmalen, durch einen Roboter mit einem solchen Greifwerkzeug sowie durch ein Verfarhen gemäß Anspruch 9 unter Verwendung eines solchen Greifwerkzeugs.
Demgemäss kennzeichnet sich das erfindungsgemässe Greifwerkzeug für einen Roboter nach dem Oberbegriff des Patentanspruches 1 dadurch, dass am zweiten Ende der Schiene eine Klemmvorrichtung angebracht ist.

Durch die erfindungsgemässe Greifvorrichtung, die mit einer Ausgleichsvorrichtung verbunden ist, wird es erfindungsgemäss ermöglicht, dass der Roboter zunächst das Greifwerkzeug und damit das Werkstück in eine bestimmte Position verbringen kann. Die Ausgleichsvorrichtung kann in dieser Endposition zudem das Werkstück in Richtung einer geraden Linie bewegen. Auf diese Weise ist die gradlinige Bewegung eines Werkstückes besonders einfach realisiert. Bei einem Roboter, insbesondere mehrachsige Roboter mit einem Roboterarm an dessen Ende das Greifwerkzeug befestigt ist, müssen nämlich in der Regel mehrere Achsen gleichzeitig koordiniert bewegen, um eine gradlinige Bewegung des Werkstückes durchzuführen. Das erfindungsgemässe Greifwerkzeug vereinfacht diesen Vorgang und erhöht damit die Flexibilität auch in den Bewegungsabläufen und für den Roboter insgesamt. Die Programmiervorgänge für die Ansteuerung der einzelnen Bewegungsabläufe für den Roboter und das System Robomit Greiferwerkzeug ist vereinfacht und insbesondere die gradlinige Bewegung des Werkstücks in besonders einfacher Weise realisiert.

Somit ist auch gezeigt, dass die Aufgabe durch einen Roboter mit einem erfindungsgemäßen Greifwerkzeug mit dem im Patentanspruch 7 genannten Merkmalen gelöst ist.

Die Aufgabe betreffend das Verfahren zum Beschicken einer Reckwalzenanordnung mit Werkstücken wird durch das erfindungsgemäße Verfahren mit den Merkmalen gemäß Patentanspruch 9 gelöst.

Demnach weist das erfindungsgemäße Verfahren zum Beschicken einer Reckwalzenanordnung mit Werkstücken unter Verwendung des erfindungsgemäßen Greifwerkzeugs folgende Verfahrensschritte auf:
- zunächst wird ein unbearbeitetes Werkstück durch ein an einem Roboter angebrachtes Greifwerkzeug an einer Aufnahmeposition aufgenommen.
- Das aufgenommene Werkstück wird durch den Roboter einer Reckwalzenanordnung zugeführt.
- Dann wird dass durch die Reckwalzenanordnung bearbeitete Werkstück durch den Roboter nach der Bearbeitung mit dem Greifwerkzeug von der Reckwalzenanordnung übernommen und
- schließlich wird das bearbeitete Werkstück durch den Roboter zu einer Ablageposition gebracht, an der das Werkstück durch das Greifwerkzeug abgelegt wird.

Bisher wurden Reckwalzenanordnungen in der Regel mit Hilfe von händischem Einlegen von Werkstücken in die Anordnung beschickt. Dieser Zustand wird erfindungsgemäß durch das Verfahren zum Beschicken einer Reckwalzenanordnung mit Werkstücken erheblich verbessert, indem das Greifwerkzeug ein zu bearbeitendes Werkstück in die Reckwalzenanordnung einlegt und sobald die Reckwalzenanordnung das Werkstück ergriffen hat das Greifwerkzeug geöffnet wird und das Werkstück freigibt.

Der Roboter belässt in einer einfachen Ausgestaltung das Greifwerkzeug an der Übergabeposition des Werkstücks an die Reckwalzenanordnung und wartet bis das Werkstück bearbeitet ist, um es anschließend wieder zu ergreifen und in eine vorbestimmte Ablageposition zu verbringen. Auf diese Weise laufen die Beschickungsvorgänge automatisiert und damit schneller und sicherer ab, als dies mit dem händischen Einlegen möglich wäre.

Eine vorteilhafte Weiterbildung des erfindungsgemäßen Verfahrens ist dadurch gekennzeichnet, dass das zu bearbeitende Werkstück von einer Walzengruppe der Reckwalzenanordnung positioniert wird, und dass die Zuführung zur und die Übernahme von der Walzengruppe durch das Greifwerkzeug vorgenommen wird.

Hierdurch ist das erfindungsgemäße Verfahren zum Beschicken einer Reckwalzenanordnung in vorteilhafter Weise weiter flexibilisiert. Eine Reckwalzenanordnung kann nämlich mehrere Walzengruppen aufweisen, insbesondere dann wenn aus den zu bearbeiteten Werkstücken, insbesondere Rund- oder Mehrkantstäben, die zu entsprechend dünneren und längeren Rund- beziehungsweise Mehrkantstäben gewalzt werden, in mehreren einzelnen Reckschritten bearbeitet werden, bis der gewünschte Enddurchmesser beziehungsweise Endabmessungen erreicht sind. Dementsprechend können die Walzengruppen beispielsweise nebeneinander angeordnet sein, so dass die Position des zu bearbeitenden Werkstücks oder des teilbearbeitenden Werkstücks je nach nächstfolgendem Bearbeitungsschritt verändert werden muss.

Von Vorteil ist es zudem, wenn eine Ausgleichsvorrichtung die Arbeitsgeschwindigkeit der Walzengruppe und gegebenenfalls die Geschwindigkeitsänderungen ausgleicht, und wenn der Greifer das Werkstück bis in den Nahbereich der Walzengruppe führt.

Hierdurch ist nämlich erreicht, dass das Greifwerkzeug die Werkstücke nicht nur an die Reckwalzenanordnung übergibt, sondern durch die Ausgleichsvorrichtung die Möglichkeit besteht, das Werkstück an einem Ende zu greifen während das andere Ende, des in der Regel längst erstreckten Werkstückes, bereits von der Reckwalzenanordnung ergriffen ist und durch die Ausgleichsvorrichtung entlang dessen Längsachse bis in den Nahbereich der Walzengruppe der Reckwalzenanordnung geführt wird. Damit ist erreicht, dass das Werkstück auf einem optimal langen Weg während der Bearbeitung geführt wird. Zudem ist es möglich, dass die Greifervorrichtung zu einem möglichst späten Zeitpunkt das Werkstück freigibt.

Weitere vorteilhafte Ausgestaltungen des erfindungsgemäßen Greiferwerkzeuges des Roboters mit einem Greiferwerkzeug sowie des erfindungsgemäßen Verfahrens zur Beschickung einer Reckwalzenanordnung mit Werkstücken sind den weiteren abhängigen Ansprüchen zu entnehmen.

Anhand des in den Zeichnungen dargestellten Ausführungsbeispiels sollen die Erfindung, vorteilhafte Ausgestaltungen und Verbesserungen der Erfindung, sowie besondere Vorteile der Erfindung näher erläutert und beschrieben werden.

Es zeigen:
- Fig. 1: eine dreidimensionale Darstellung eines erfindungsgemäßen Greiferwerkzeugs,
- Fig. 2: eine Schnittansicht durch eine Ausgleichsvorrichtung mit einer Greifervorrichtung sowie
- Fig. 3: eine weitere dreidimensionale Darstellung eines erfindungsgemäßen Greiferwerkzeugs.

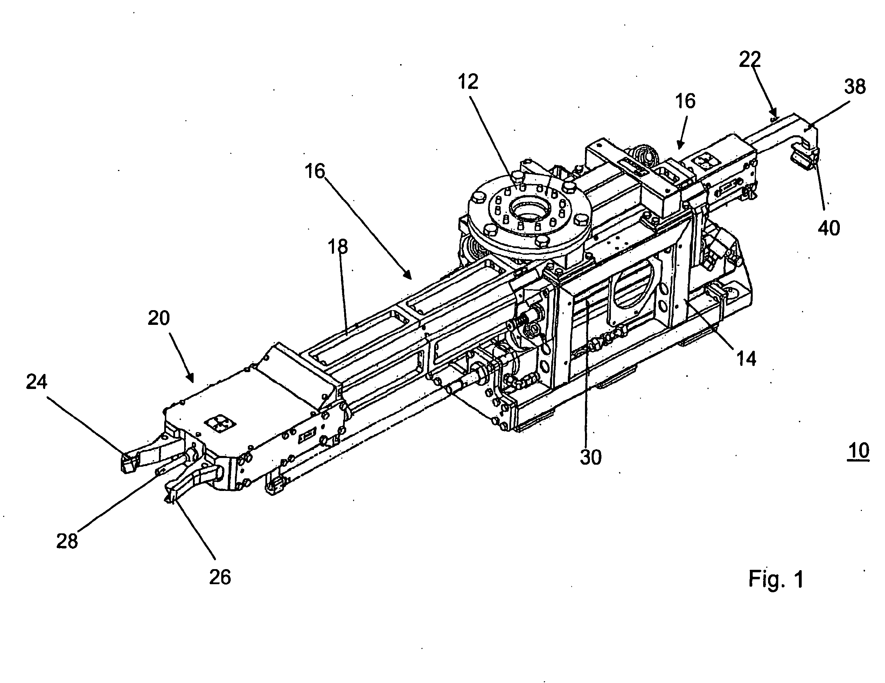

Fig. 1 zeigt ein erfindungsgemäßes Greiferwerkzeug 10 aus einer Blickrichtung von schräg oben auf eine dreidimensionale Darstellung. In diesem Bild oben ist ein Werkzeuganschlusselement 12 gezeigt, an dem ein entsprechendes Gegenstück eines Roboters das Greiferwerkzeug 10 aufnehmen kann. Der Roboter ist jedoch nicht gezeigt, ist in der Regel jedoch ein sechsachsiger.Standardroboter, der geeignet ist sowohl das Greiferwerkzeug 10 als auch das aufzunehmende Werkstück aufzunehmen und entsprechend den Anforderungen auch zu bewegen.

Das Werkzeuganschlusselement ist an einem Gestell 14 angebracht, so dass alle Kräfte und Momente sicher zwischen Greiferwerkzeug 10 und Roboter übertragbar sind. Dabei ist das Gestell 14 etwa quaderförmig aus Rahmenelementen aufgebaut. Im freien mittleren Bereich zwischen den Rahmenelementen des Gestells 14 und zwar in Richtung der größten Längserstreckung des Rahmens 14 ist eine Ausgleichsvorrichtung 16 angeordnet, die im wesentlichen eine Schiene 18 und ein Antrieb aufweist. An einem ersten Ende der Schiene 18 ist eine Greifervorrichtung 20 angeordnet und an dem zweiten Ende der Schiene 18 ist eine Klemmvorrichtung 22 angebracht.

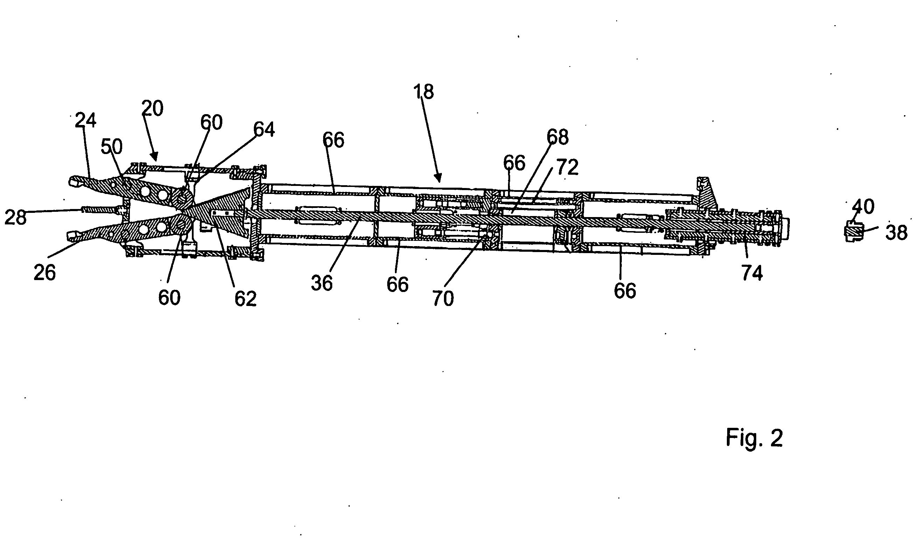

Der nähere Aufbau der Ausgleichsvorrichtung 16 sowie der Wirkungsweise sowie die der Greifervorrichtung 20 und der Klemmvorrichtung 22 sind in Fig. 2 näher erläutert. Erwähnt sei hier nur, dass die Greifervorrichtung 20 einen ersten 24 und einen zweiten Finger 26 aufweist, mit denen das zu bearbeitende Werkstück aufnehmbar und fixierbar, insbesondere klemmbar, ist. Zudem ist ein Anschlag 28 gezeigt, der sicherstellt, dass ein zu greifendes Werkstück immer eine definierte Position an der Greifervorrichtung 20 einnimmt.

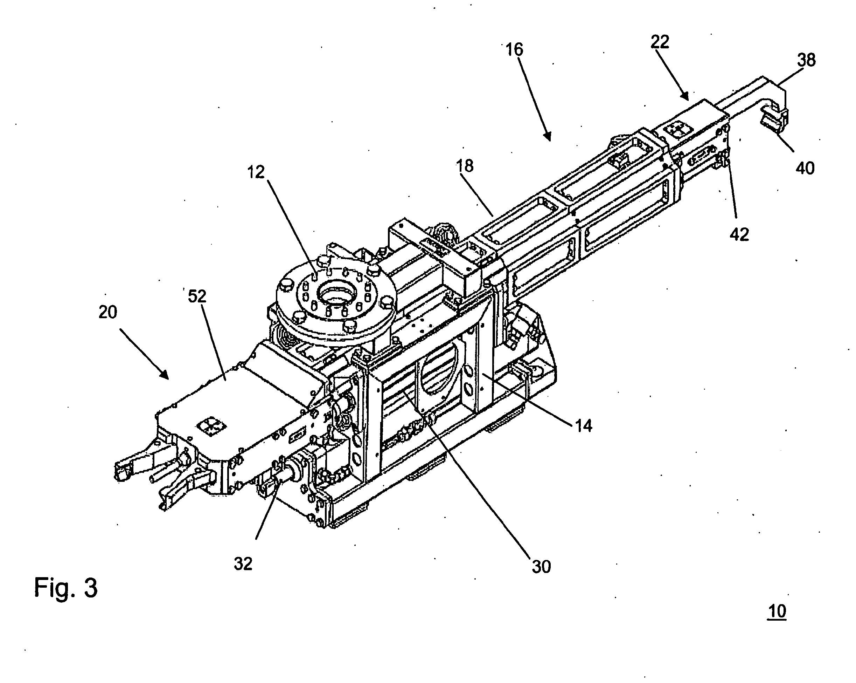

Ebenfalls im lichten Innenbereich der Rahmenelemente des Gestells 14 ist in Figur 3 unterhalb der Schiene 18 eine Stoßdämpfvorrichtung 30 gezeigt, die in Richtung der Greifervorrichtung 20 einen Stab 32 aufweist, dessen zur Greifervorrichtung 20 weisendes Ende mit einem Verbindungselement verbunden ist, das an der Greifervorrichtung 20 angebracht ist. Auf diese Weise werden auftretende Kräfte in Längsrichtung der Schiene 18 mit einer Dämpfung entsprechend der Auslegung der Stoßdämpfervorrichtung 30 aufgenommen. Diese ist ebenfalls fest mit dem Gestell 14 verbunden.

Ein in dieser Ansicht durch die Schiene 18 verdeckte Kolbenstange 36 ist auf deren Seite die zur Klemmvorrichtung 22 weist mit einem Klemmelement 38 verbunden. Durch die Bewegung der Kolbenstange 36 in deren Längsrichtung wird damit auch das Klemmelement 38 betätigt und eine an diesem angebrachte erste Klemmbacke 40 in Richtung einer zweiten Klemmbacke 42 bewegt oder von ihr weg. Auf diese Weise kann ein dazwischen befindliches Werkstück, hier insbesondere aufgrund der Backenform der Klemmbacken 40, 42 ein Vierkantstahlstab fest zwischen den Klemmbacken 40, 42 eingeklemmt werden. Die Klemmvorrichtung 22 ist so ausgelegt, dass die Längsrichtung eines eingeklemmten Stabes quer zur Längsrichtung der Schiene 18 verläuft.

Zum besseren Verständnis des Klemmvorganges sowie der entsprechenden Elemente, die das Klemmen oder Entklemmen bewirken wird in der nun folgenden Figurenbeschreibung zur Fig. 2 näher eingegangen.

Fig. 2 zeigt eine Schnittansicht mit einer Blickrichtung gemäß Fig. 1 von oben durch die Bauelemente Greifervorrichtung 20, Schiene 18 sowie Klemmvorrichtung 22 des Greiferwerkzeugs 10. Da Fig. 2 ein Schnitt durch das erfindungsgemäße Greiferwerkzeug 10 darstellt, sind die Bezugszeichen für die entsprechenden Teile aus Fig. 1 auch in der Fig. 2 verwendet. Die Schiene 18 ist jedoch vom Gestell 14 freigeschnitten, so dass dieses und die weiteren an dem Gestell 14 angebauten Elemente in dieser Figur nicht mehr gezeigt sind.

Der erste Finger 24 der Greifervorrichtung 20 ist um ein erstes Lager 50, das an einem Gehäuse 52 der Greifervorrichtung 20 angebracht ist, schwenkbar gelagert. Entsprechend ist der zweite Finger 26 in einem zweiten Lager 54 gelagert. Die Lager 50, 54 unterteilen die Finger 24, 26 in zwei Hebelseiten, wobei die von der Schiene 16 wegweisende Hebelseite des ersten Fingers 24 als dritte Klemmbacke 56 und entsprechend die des zweiten Fingers 26 als vierte Klemmbacke 58 ausgebildet ist. Die jeweils wegweisenden Enden der Finger 24, 26 sind mit jeweils einer Rolle 60 versehen, die es einem Keil 62 erlauben, die Rollen 60 auseinandergedrückt werden; die dritte 56 und vierte Klemmbacke 56 werden dabei entsprechend aufeinander zu bewegt, so dass besonders einfach in einen Zwischenraum zwischen den Rollen 60 einzudringen. Dabei werden die Rollen 60 durch eine Führungsvorrichtung 62 gegen den Keil 60 gedrückt, so dass in jeder Betriebssituation Kontakt zwischen dem Keil 62 und den Rollen 60 besteht.

Durch die Keilform mit einer Spitze, die zu den Rollen 60 weist, ist sichergestellt, dass die Finger 24, 26 mechanisch besonders wirkungsvoll auf das zu greifende Werkstück bewegbar sind. Der Keil 62 ist an dem zur Greifervorrichtung 20 weisenden Ende der Kolbenstange 36 angebracht. Die Kolbenstange 36 ist durch entsprechende Ausnehmungen in der Schiene 18, die mehrere Schienenstücken 66 aufweist, geführt, so dass nur eine Hin- und Herbewegung in Längsrichtung der Kolbenstange 36 möglich ist. Die Führung der Schiene 18 als Teil der Ausgleichsvorrichtung 16 ist jedoch nicht dargestellt. Es ist aber durch die Konstruktion der Ausgleichsvorrichtung 16 sichergestellt, dass die Schiene 18 insgesamt ebenfalls in ihrer Längsrichtung hin und her beweglich ist.

Eines der Schienenstücke 66 ist als Antriebszylinder für die Kolbenstange 36 ausgebildet mit einem Zylinderraum 68, in dem von einem benachbarten Schienenstück 66 über eine Lufteinspeisung 70 sowie eine Luftführung 72 bedarfsweise Luft in den Zylinderraum 68 eingebracht oder herausgenommen werden kann. Auf diese Weise lässt sich über den Luftdruck sowohl die Lage der Kolbenstange, als auch die am Keil beziehungsweise die am Klemmelement 38 aufzubringende Kraft in besonders einfacher Weise regeln und bestimmen.

Am vom Keil 62 abgewandten Ende der Kolbenstange 36 ist ein Verbindungselement 74 mit der Kolbenstange 36 verbunden, an dem das Klemmelement 38 angebracht ist. Auf diese Weise wird dieses durch die Hin- und Herbewegung der Kolbenstange 36 ebenfalls bewegt.

Das erfindungsgemäße Verfahren soll nun unter Verwendung des Greiferwerkzeuges 10 näher erläutert werden.

Das Greiferwerkzeug 10 ist mit seinem Werkzeuganschlusselement 12 an dem Roboter hier insbesondere am Ende eines Armes eines Mehrachsroboters, angeschlossen. Die zu bewältigende Aufgabe soll dabei das Beschicken einer Reckwalzenanordnung mit Werkstücken sein. In diesem Beispielfall ist ein derartiges Werkstück ein Vierkantstab, der durch die Reckwalzenanordnung, die aus mehreren Walzengruppen bestehen soll, zu einem bearbeiteten Vierkantstab werden soll, der am Ende des Prozesses länger, jedoch in seinen Abmessungen im Querschnitt verkleinert ist. Hierzu verfährt der Roboter das Greifwerkzeug 10 an eine vorbestimmte Position, an dem ein unbearbeitetes Werkstück liegt oder bevorratet ist. Dabei wird das Greiferwerkzeug vom Roboter so an den Stab heranbewegt, dass der erste und zweite Finger 24, 26 in den Nahbereich von einem der Enden des Vierkantstabes angeordnet ist. Die Greifervorrichtung 20 nähert sich dann aus der Längsrichtung des Stabes diesem Ende bis der Anschlag 28 den Vierkantstab berührt. Dies kann beispielsweise auch durch einen entsprechenden Sensor am Anschlag 28 detektiert werden und entsprechend als Signal an die Robotersteuerung oder an die Greifwerkzeugsteuerung, die jedoch in den Figuren nicht gezeigt ist, gemeldet werden. Die Längsbewegung auf den Vierkantstab zu, kann entweder durch den Roboter selbst erfolgen oder durch eine entsprechende Längsverschiebung der Ausgleichsvorrichtung 16. Sobald der Anschlag 28 den Stab berührt können die Finger 24, 26 in Richtung Stab bewegt werden, solange bis dieser fest eingeklemmt ist und in seiner Position fixiert. Dies geschieht zum Beispiel indem der Keil 62 in Richtung der Finger 24, 26 bewegt wird, entweder um einen bestimmten vorgegebenen Betrag an Strecke oder bis in den Figuren nicht gezeigte Kraftsensoren eine bestimmte Klemmkraft der Finger 24, 26 detektieren. Von Vorteil ist es auch, wenn die Kantstäbe nicht auf einer entsprechenden Unterlage der Länge nach liegen, sondern wenn sie auf einer oder in einer entsprechende Haltevorrichtung mit ihrer Längsachse senkrecht stehen, dann kann das Greiferwerkzeug 10 vom Roboter so bewegt werden, dass die Ausgleichsvorrichtung 16 mit ihrer Längsachse ebenfalls senkrecht steht und sozusagen von oben an den Stab herangefahren wird. Auf diese Weise ist das Greifen des Werkstücks vereinfacht.

Das gegriffene Werkstück wird nun zusammen mit dem Greiferwerkzeug 10 an die erste von mehreren Walzengruppen einer Reckwalzenanordnung verbracht. Dass dem gegriffenen Ende des Vierkantstabs entgegengesetzte Ende wird nun in die Walzenanordnung eingeführt. Das sind üblicherweise wenigstens zwei gegenüberliegende Rollen, oder Reckwalzen die angetrieben werden und den Vierkantstab in den von ihren gebildeten Zwischenraum einziehen. Dabei erfährt der Vierkantstab zunächst eine Beschleunigung und dann eine durch die Walzengruppe bewirkte Längenveränderung, die letztlich zu einer Geschwindigkeitsänderung des Stabes führt. Diese Bewegungen können durch das erfindungsgemäße Greiferwerkzeug 10 in besonders einfacher Weise ausgeglichen werden. Hierzu wird nämlich das Greiferwerkzeug 10 so ausgerichtet, dass die Ausgleichsvorrichtung 16 mit ihrer Längsachse in der Verlängerung der Bewegungsrichtung des Vierkantstabes liegt, wenn dieser in die Walzengruppe eingezogen wird. Auf diese Weise kann die Längsbewegung der Ausgleichsvorrichtung 16 die entsprechende Bewegung des Stabes, wenn dieser in die Walzengruppe einbezogen wird, nachvollziehen. Dazu wird die Antriebsvorrichtung der Ausgleichsvorrichtung 16 freigeschaltet, so dass diese ohne Krafteinwirkung durch die Antriebsvorrichtung der Ausgleichsvorrichtung für die Schiene 18 hin und her beweglich ist. Auf diese Weise ist auch sichergestellt, dass keine Wechselwirkung von Kräften zwischen den Walzengruppen und dem Roboter entstehen. Gleichwohl sorgt die Ausgleichsvorrichtung 16 und deren mechanische Führung, die die Bewegung nur in einer Raumrichtung zulässt dafür, dass der Vierkantstab, der zu bearbeiten ist, nicht nur durch die Walzengruppe selbst geführt wird, sondern auch durch das Greiferwerkzeug 10.

Der Vierkantstab wird nun in die Walzengruppe zur Bearbeitung eingezogen, wobei der erste und zweite Finger 24, 26 so lange den Vierkantstab gegriffen hält, bis dieser fast vollständig in die Walzengruppe eingezogen wird. Dabei wird der Zeitpunkt des Loslassens der Finger 24, 26, also die Freigabe des Werkstücks durch das Greifwerkzeug 10 entweder durch die Bewegung der Schiene 18 selbst bestimmt, oder beispielsweise über einen Nährungssensor, der die Nähe zu der Walzengruppe selbsttätig feststellt. In besonders einfacher Weise ist jedoch die Bewegung der Schiene 18 durch Positionssensoren zu messen und zu überprüfen, so dass sichergestellt ist, dass die Finger 24, 26 nur eine bestimmte Strecke beim Verfahren der Schiene 18 geschlossen bleiben und automatisch anschließend den Vierkantstab loslassen.

In dieser Position verharrt das Greiferwerkzeug 10, bis die Bearbeitung durch die Walzengruppe beendet ist. Je nach Bearbeitungszeit hierfür, kann das Greiferwerkzeug 10 jedoch auch für andere und weitere Aufgaben eingesetzt werden und fährt dann an diese Position zurück in der dieses den Vierkantstab nun wieder mit dem ersten und zweiten Finger 24, 26 ergreift und entweder mit der Ausgleichsvorrichtung 16 und dessen Antrieb aus der Walzengruppe zieht oder einfach durch die Antriebskräfte der Walzengruppe den Vierkantstab lediglich führt, bis dieser vollständig aus der Walzengruppe herausgelaufen ist. Das nunmehr teilbearbeitete Werkstück wird nun zu einer weiteren Walzengruppe geführt, an der sich der zuvor beschriebene Vorgang wiederholt. Dies wird nun so lange wiederholt, bis die gewünschten Abmessungen des Vierkantstabes erreicht sind. Nach der letzten Bearbeitung des Vierkantstabs durch eine Walzengruppe wird dieser dann an einer Endposition abgelegt. Typische Antriebsgeschwindigkeiten für den Einzug eines Werkstückes in eine Reckwalzengruppe sind 1,6 m/s, zuzüglich der auftretenden Geschwindigkeitsänderung durch die Längung des Werkstücks aufgrund der Formänderung durch die Reckwalzen. Diese vergleichsweise große Beschleunigungen werden letztlich von dem Greifersystem, also durch das Greiferwerkzeug 10 und insbesondere durch die Ausgleichsvorrichtung 16, aufgenommen. Daher ist es ein besonderer Vorteil, wenn die Stoßdämpfervorrichtung 30 mit der Schiene 18 oder wie im vorliegenden Beispiel mit der Greifervorrichtung 20 verbunden ist, so dass entsprechende Stöße und Impulse durch die Walzengruppe nur gedämpft an die Greifervorrichtung 20, die Schiene 18, die Ausgleichsvorrichtung 16 und das Greiferwerkzeug 10 insgesamt weiter gegeben werden.

Fig. 3 zeigt eine weitere Ansicht auf das Greiferwerkzeug 10. Das Werkzeug 10 ist durch ein Werkzeuganschlusselement 12 einerseits an einen Roboter und andererseits an ein Gestell 14 angeschlossen. Durch das Gestell 14 ist die Ausgleichsvorrichtung 16 mit den Schienen 18 hin- und herbeweglich geführt. An den Schienen 18 ist einerseits das Gehäuse 52 der Greifervorrichtung 20 und andererseits die Klemmvorrichtung 22 mit Klemmbacken 40, 42 und Klemmelement 38 angebracht. Zwischen dem Gestell 14 und dem Gehäuse 52 oder der Schiene 18 ist ein Stab 32, der einen teleskopartigen Aufbau aufweist, befestigt. Der Stab 32 führt eine lineare Bewegung aufgrund einer in dieser Figur nicht näher dargestellten hubkolbenartigen Struktur in dessen Inneren aus. Bedarfsweise wird der Stab 32 z. B. durch Beaufschlagung mit Druckluft derart angesteuert, dass er als Stellglied für die Ausgleichsvorrichtung 16 wirkt und diese z. B. in Richtung der Greifervorrichtung 20 bewegt. Entsprechend wird beim Zusammenziehen des Stabes 32 die Greifervorrichtung 20 in Richtung Gestell 14 bewegt. Dabei wird jedoch die Klemmvorrichtung 22 vom Werkzeuganschlusselement 12 wieder wegbewegt. Eine Stoßdämpfervorrichtung 30, die im Gestell 14 angeordnet ist, arbeitet mit der Ausgleichsvorrichtung 16 zusammen und nimmt auftretende Kräfte in Längsrichtung der Schiene 18 auf. Die Bewegung der in Fig. 2 beschriebenen Kolbenstange 36 mit dem Keil 62 und dem daraus resultierenden Greifen der Finger 24, 26 bzw. das Klemmen mittels der Klemmbacke 42 ist unabhängig von der linearen Bewegung der Ausgleichsvorrichtung 16 ausführbar.

### Bezugszeichenliste

- 10: Greiferwerkzeug
- 12: Werkzeuganschlusselement
- 14: Gestell
- 16: Ausgleichsvorrichtung
- 18: Schiene
- 20: Greifervorrichtung
- 22: Klemmvorrichtung
- 24: erster Finger
- 26: zweiter Finger
- 28: Anschlag
- 30: Stoßdämpfervorrichtung
- 32: Stab

- 36: Kolbenstange
- 38: Klemmelement
- 40: erste Klemmbacke
- 42: zweite Klemmbacke
- 50: erstes Lager
- 52: Gehäuse
- 54: zweites Lager
- 56: dritte Klemmbacke
- 58: vierte Klemmbacke
- 60: Rolle
- 62: Keil
- 64: Führungsvorrichtung
- 66: Schienenstücke
- 68: Zylinderraum
- 70: Lufteinspeisung
- 72: Luftführung

## Patentansprüche

1. Greifwerkzeug für einen Roboter, welches Greifwerkzeug zum Aufnehmen und Positionieren eines Werkstückes mittels einer Greifvorrichtung (20) dient und mit einem Gestell (14) versehen ist, an dem ein Werkzeuganschlusselement (12) angeordnet ist, welches eine Verbindung mit einem Roboter ermöglicht, wobei eine Ausgleichsvorrichtung (16) in dem Gestell (14) angeordnet ist, die im wesentlichen eine Schiene (18) und einen Antrieb aufweist, und wobei die Greifvorrichtung an einem ersten Ende der Schiene (18) angeordnet ist und durch die Ausgleichsvorrichtung linear bewegbar ist,
**dadurch gekennzeichnet, dass**
an dem zweiten Ende der Schiene (18) eine Klemmvorrichtung (22) angebracht ist.

2. Greifwerkzeug (10) nach Anspruch 1, **dadurch gekennzeichnet, dass** eine Dämpfungsvorrichtung mit der Ausgleichsvorrichtung (16) verbunden ist, mit der Stösse in Richtung der geraden Linie gedämpft sind.

3. Greifwerkzeug (10) nach einem der vorgenannten Ansprüche, **dadurch gekennzeichnet, dass** die Greifvorrichtung (20) wenigstens zwei Greiferfinger (24, 26) aufweist, deren Greifbewegung symmetrisch ausführbar ist.

4. Greifwerkzeug (10) nach einem der vorgenannten Ansprüche, **dadurch gekennzeichnet, dass** die Greifvorrichtung (20) und / oder die Ausgleichsvorrichtung (16) Sensoren aufweist, mit denen Positionen von Greifvorrichtung (20), Greiferfinger (24, 26) oder Ausgleichsvorrichtung (16), oder Geschwindigkeiten von Greifvorrichtung (20) oder Ausgleichsvorrichtung (16), oder Beschleunigungen von Greifvorrichtung (20) oder Ausgleichsvorrichtung (16) ermittelbar sind.

5. Roboter mit einem Greifwerkzeug (10) nach einem der Ansprüche 1 bis 6.

6. Roboter nach Anspruch 5, **dadurch gekennzeichnet, dass** die gerade Linie parallel zu einer Einzugsrichtung des Werkstücks in eine Walzengruppe einer Reckwalzenanlage positionierbar ist.

7. Verfahren zur Beschicken einer Reckwalzenanordnung mit Werkstücken, unter Verwendung eines Greifwerkzeugs gemäß eines der Ansprüche 1 bis 6, wobei
- ein unbearbeitetes Werkstück durch ein an einem Roboter angebrachtes Greifwerkzeug (10) an einer Aufnahmeposition aufgenommen wird, wobei
- das aufgenommene Werkstück durch den Roboter einer Reckwalzenanordnung zugeführt wird, wobei
- das durch die Reckwalzenanordnung bearbeitete Werkstück durch den Roboter nach der Bearbeitung mit dem Greifwerkzeug (10) von der Reckwalzenanordnung übernommen wird, und wobei
- das bearbeitete Werkstück durch den Roboter zu einer Ablageposition gebracht wird, an der das Werkstück durch das Greifwerkzeug (10) abgelegt wird.

8. Verfahren nach Anspruch 7, **dadurch gekennzeichnet, dass** das unbearbeitete Werkstück von einer Vorrats- oder Transportvorrichtung für unbearbeitete Werkstücke aufgenommen wird.

9. Verfahren nach Anspruch 9 oder 10, **dadurch gekennzeichnet, dass** das bearbeitende Werkstück einer Vorrats- oder Transportvorrichtung für bearbeitete Werkstücke abgelegt wird.

10. Verfahren nach einem der Ansprüche 9 bis 11, **dadurch gekennzeichnet, dass** das zu bearbeitende Werkstück von einer Walzengruppe der Reckwalzenanordnung positioniert wird, und dass die Zuführung zur und die Übernahme von der Walzengruppe durch das Greifwerkzeug (10) vorgenommen wird.

11. Verfahren nach einem der Ansprüche 9 bis 12, **dadurch gekennzeichnet, dass** die Ausgleichsvorrichtung (16) die Arbeitsgeschwindigkeit der Walzengruppe und gegebenenfalls Geschwindigkeitsänderungen ausgleicht, und dass die Greifvorrichtung (20) das Werkstück bis in den Nahbereich der Walzengruppe führt.

12. Verfahren nach Anspruch 13, **dadurch gekennzeichnet, dass** durch die Ausgleichsvorrichtung (16) eine lineare Bewegung des Werkstückes durchgeführt wird.

13. Verfahren nach einem der Ansprüche 7 bis 12, **dadurch gekennzeichnet, dass** eine Dämpfungsvorrichtung zur Stossdämpfung mit der der Ausgleichsvorrichtung (16) zusammenarbeitet.

14. Verfahren nach einem der Ansprüche 7 bis 13, **dadurch gekennzeichnet, dass** unbearbeitete oder teilbearbeitete Werkstücke durch den Roboter mit dem Greifwerkzeug (10) in einer vorgegebenen Reihenfolge zu Walzengruppen einer mehrer Walzengruppen umfassenden Reckwalzenanordnung verbracht wird.

## Claims

1. A gripping tool for a robot, which gripping tool is used for receiving and positioning a workpiece by means of a gripping apparatus (20) and is provided with a frame (14) on which a tool connecting element (12) is arranged which enables a connection with a robot, with a balancing device (16) being arranged in the frame (14) which comprises substantially a rail (18) and a drive, and with the gripping apparatus being arranged at a first end of the rail (18) and being linearly movable by the balancing apparatus, **characterized in that** a clamping apparatus (22) is attached to the second end of the rail (18).

2. A gripping tool (10) according to claim 1, **characterized in that** a damping apparatus is connected with the balancing apparatus (16) with which impacts in the direction of the straight line are dampened.

3. A gripping tool (10) according to one of the preceding claims, **characterized in that** the gripping apparatus (20) comprises at least two gripping fingers (24, 26) whose gripping movement can be performed symmetrically.

4. A gripping tool (10) according to one of the preceding claims, **characterized in that** the gripping apparatus (20) and/or the balancing apparatus (16) comprises sensors with which it is possible to determine the positions of the gripping apparatus (20), the gripping fingers (24, 26) or the balancing apparatus (16), or accelerations of the gripping apparatus (20), the gripping fingers (24, 26) or the balancing apparatus (16).

5. A robot with a gripping tool (10) according to one of the claims 1 to 6.

6. A robot according to claim 5, **characterized in that** the straight line can be positioned parallel to a direction of feed of the workpiece into a group of rolls of a forge rolling unit.

7. A method for loading a forge roll arrangement with workpieces by using a gripping tool according to one of the claims 1 to 6, with
- an untreated workpiece being taken up to a receiving position by a gripping tool (10) attached to a robot, with
- the received workpiece being supplied by the robot to a forge rolling arrangement, with
- the workpiece processed by the forge rolling arrangement being received by the robot after the processing with the gripping tool (10) from the forge rolling arrangement, and with
- the processed workpiece being brought by the robot to a depositing position where the workpiece is placed by the gripping tool (10).

8. A method according to claim 7, **characterized in that** the untreated workpiece is taken from a storage or transport apparatus for untreated workpieces.

9. A method according to claim 9 or 10, **characterized in that** the processed workpiece is placed in a storage or transport apparatus for processed workpieces.

10. A method according to one of the claims 9 to 11, **characterized in that** the workpiece to be processed is positioned by a group of rolls of the forge rolling arrangement and that the feeding to and the removal from the group of rolls is performed by the gripping tool (10).

11. A method according to one of the claims 9 to 12, **characterized in that** the balancing apparatus (16) compensates the working speed of the group of rolls and optionally the changes in speed, and that the gripping apparatus (20) guides the workpiece up to the vicinity of the group of rolls.

12. A method according to claim 13, **characterized in that** a linear movement of the workpiece is performed by the balancing apparatus (16).

13. A method according to one of the claims 7 to 12, **characterized in that** a damping apparatus for shock absorption cooperates with the balancing apparatus (16).

14. A method according to one of the claims 7 to 13, **characterized in that** untreated or partially treated workpieces are transported by the robot with the gripping tool (10) in a given sequence to the groups of rollers of a forge rolling arrangement comprising one or several groups of rolls.

## Revendications

1. Outil de préhension pour un robot, lequel outil de préhension sert à saisir et positionner une pièce au moyen d'un dispositif de préhension (20) et est muni d'un bâti (14) sur lequel est disposé un élément de raccordement d'outil (12) qui permet le raccordement à un robot, un dispositif de compensation (16) comprenant pour l'essentiel un rail (18) et un entraînement étant disposé dans le bâti (14) et le dispositif de préhension étant disposé à une première extrémité du rail (18) et pouvant être déplacé de façon linéaire par le dispositif de compensation,
**caractérisé en ce qu'**un dispositif de serrage (22) est disposé à la deuxième extrémité du rail (18).

2. Outil de préhension (10) selon la revendication 1, **caractérisé en ce qu'**un dispositif d'amortissement amortissant les chocs dans la direction de la ligne droite est relié au dispositif de compensation (16).

3. Outil de préhension (10) selon l'une des revendications précédentes, **caractérisé en ce que** le dispositif de préhension (20) présente au moins deux doigts de préhension (24, 26) dont le mouvement de préhension peut être exécuté de façon symétrique.

4. Outil de préhension (10) selon l'une des revendications précédentes, **caractérisé en ce que** le dispositif de préhension (20) et/ou le dispositif de compensation (16) présentent des capteurs qui permettent de déterminer la position du dispositif de préhension (20), des doigts de préhension (24, 26) ou du dispositif de compensation (16) ou la vitesse du dispositif de préhension (20) ou du dispositif de compensation (16) ou l'accélération du dispositif de préhension (20) ou du dispositif de compensation (16).

5. Robot muni d'un outil de préhension (10) selon l'une des revendications 1 à 6.

6. Robot selon la revendication 5, **caractérisé en ce que** la ligne droite peut être positionnée parallèlement à un sens d'insertion de la pièce dans un groupe de cylindres d'une installation de cylindres étireurs.

7. Procédé pour garnir une installation de cylindres étireurs avec des pièces en utilisant un outil de préhension selon l'une des revendications 1 à 6, dans lequel
- une pièce non usinée est saisie dans une position de prise en charge par un outil de préhension (10) disposé sur un robot,
- dans lequel la pièce saisie est amenée par le robot à une installation de cylindres étireurs,
- dans lequel la pièce usinée par l'installation de cylindres étireurs est retirée de l'installation de cylindres étireurs par le robot avec l'outil de préhension (10) après l'usinage, et dans lequel
- la pièce usinée est amenée par le robot dans une position de dépose dans laquelle la pièce est déposée par l'outil de préhension (10).

8. Procédé selon la revendication 7, **caractérisé en ce que** la pièce non usinée est saisie dans un dispositif de réserve ou de transport de pièces non usinées.

9. Procédé selon la revendication 9 ou 10, **caractérisé en ce que** la pièce usinée est récupérée par un dispositif de réserve ou de transport de pièces usinées.

10. Procédé selon l'une des revendications 9 à 11, **caractérisé en ce que** la pièce à usiner est positionnée par un groupe de cylindres de l'installation de cylindres étireurs et **en ce que** l'acheminement et la prise en charge depuis le groupe de cylindres sont assurés par l'outil de préhension (1.0).

11. Procédé selon l'une des revendications 9 à 12, **caractérisé en ce que** le dispositif de compensation (16) compense la vitesse de travail du groupe de cylindres et éventuellement les changements de vitesse, et **en ce que** le dispositif de préhension (20) amène la pièce jusqu'à proximité du groupe de cylindres.

12. Procédé selon la revendication 13, **caractérisé en ce que** le dispositif de compensation (16) réalise un déplacement linéaire de la pièce.

13. Procédé selon l'une des revendications 7 à 12, **caractérisé en ce qu'**un dispositif d'amortissement coopère avec le dispositif de compensation (16) pour amortir les chocs.

14. Procédé selon l'une des revendications 7 à 13, **caractérisé en ce que** des pièces non usinées ou partiellement usinées sont amenées par le robot muni de l'outil de préhension (10), dans un ordre prédéterminé, aux groupes de cylindres d'une installation de cylindres étireurs comprenant plusieurs groupes de cylindres.
